# EUROPEAN PATENT APPLICATION

(11) **EP 4 826 537 A1**
(43) Date of publication of application: **21.10.2026**
(21) Application number: 25210592.9
(22) Date of filing: 23.10.2025
(51) Int. Cl.: G06F 9/50, G06N 20/00, G06Q 10/0631

(54) **SYSTEM AND METHOD FOR INTEGRATED PROCESS AUTOMATION BETWEEN HETEROGENEOUS AGENTS**

(30) Priority: 16.04.2025 KR 20250049791; 25.07.2025 KR 20250101735
(71) Applicant: Samsung SDS Co., Ltd., Seoul 05510 (KR)
(72) Inventor: Park, Jae Hyuk, 05510 Seoul (KR)
(74) Representative: GLAWE DELFS MOLL

(57) **Abstract**

Provided are a system and method for integrated process automation between heterogeneous agents. The process automation system includes a static agent cluster including one or more static agents, an adaptive agent cluster including one or more adaptive agents, and a hybrid orchestrator. The hybrid orchestrator is configured to recognize work to be performed, select one or more agents to perform the work from the one or more static agents or the one or more adaptive agents, and distribute the work to the selected one or more agents.

## Description

### CROSS REFERENCE TO RELATED APPLICATIONS

This application claims priority from Korean Patent Application Nos. 10-2025-0049791, filed on April 16, 2025, and 10-2025-0101735, filed on July 25, 2025, which are hereby incorporated by reference for all purposes as if fully set forth herein.

### BACKGROUND

Embodiments of the disclosure relate to artificial intelligence (Al)-based process automation technology.

Robotic process automation (RPA) and business process automation (BPA) are both technologies which use automated agents (or bots) to automatically mimic and execute work processes which would otherwise be repetitively performed by users.

Existing robotic process automation or work process automation is primarily a method of executing predefined workflows based on standardized work processes. Although this approach is effective for automating simple repetitive operations, this approach is limited in the ability thereof to handle exceptions or non-standard processes outside of predefined workflows due to the inability thereof to understand the purpose or context of the work. For example, existing RPA/BPA has difficulty in properly handling natural language-based work requests such as messages, emails, and chat-based inputs.

Meanwhile, large language models (LLM) based agents are being developed as means to overcome the limitations of existing RPA/BPA-based agents. LLM-based agents are advantageously able to understand users' intentions and objectives and to actively solve problems by combining various tools. However, LLM-based agents have lower success rates in achieving objectives compared to existing RPA/BPA-based agents, and also have weaknesses in process consistency, speed, and the like.

As a result, there has been an increasing need for technologies which enable systematic collaboration of agents by integrally controlling various types of agents. However, existing commercial automation platforms are designed to be suitable to control existing RPA/BPA-based static agents only and are difficult to accommodate dynamic responses of LLM-based adaptive agents. Furthermore, existing automation platforms are typically configured to operate based on fixed schedules or human instructions, thereby resulting in limitations in constructing cognitive automation workflows based on trigger events and user context information.

The information disclosed in the Background section is only provided for a better understanding of the background and should not be taken as an acknowledgment or any form of suggestion that this information forms prior art that would already be known to a person having ordinary skill in the art.

### SUMMARY

Embodiments of the disclosure provide technical means for enabling effective collaboration of heterogeneous agents by efficiently controlling static agents based on structured or standardized processes and adaptive agents based on artificial intelligence (AI) for handling unstructured events in a single integrated structure.

According to example embodiments, provided is a process automation system including: a static agent cluster including one or more static agents; an adaptive agent cluster including one or more adaptive agents; and a hybrid orchestrator configured to recognize work to be performed, select one or more agents to perform the work from the one or more static agents or the one or more adaptive agents, and distribute the work to the selected one or more agents.

In an embodiment, the one or more static agents may be configured to perform the work based on a predefined workflow or rule.

In an embodiment, the one or more adaptive agents may be agents based on a large language model or reinforcement learning.

In an embodiment, the hybrid orchestrator may divide the work to be performed into one or more tasks and assign the one or more agents of the one or more static agents or the one or more adaptive agents according to the divided one or more tasks.

In an embodiment, the hybrid orchestrator may assign a static agent to perform a selected task of the one or more tasks based on metadata associated with the one or more static agents.

In an embodiment, in a case in which it is determined that it is impossible to perform the selected task by the one or more static agents, the hybrid orchestrator may assign the selected task to one or more agents selected from the one or more agents of the adaptive agent cluster.

In an embodiment, the hybrid orchestrator may select one of task performing results of two or more adaptive agents in a case in which the selected task is assigned to the two or more adaptive agents.

In an embodiment, the hybrid orchestrator may associate a task performing result of an agent assigned with the selected task of the one or more tasks with an agent assigned with a next task of the selected task.

In an embodiment, the hybrid orchestrator may detect a trigger event generated from one or more event sources and generate the work to be performed from the trigger event.

In an embodiment, the one or more event sources may include one or more of enterprise legacy systems, groupware, communication systems, or third-party applications.

In an embodiment, the hybrid orchestrator may generate the work to be performed by additionally considering context information of a user related to the trigger event.

In an embodiment, the context information may include one or more of a department, a job position, an assigned work, a performance indicator, or a preferred response type of the user.

In an embodiment, the hybrid orchestrator may be configured to generate the work to be performed through natural language-based semantic inference of the trigger event and the context information of the user.

According to other example embodiments, provided is a process automation method performed by a computing device, wherein the computing device includes: one or more processors; and a memory which stores one or more programs to be executed by the one or more programs. The process automation method may include: recognizing work to be performed; selecting one or more agents to perform the work from one or more static agents included in a static agent cluster or one or more adaptive agents included in an adaptive agent cluster; distributing the work to the selected one or more agents; and performing the work by the one or more agents.

In an embodiment, the static agents may be configured to perform the work based on a predefined workflow or rule.

In an embodiment, the one or more adaptive agents may be agents based on a large language model or reinforcement learning.

In an embodiment, the selection of the one or more agents may include: dividing the work to be performed into one or more tasks; and assigning the one or more agents of the one or more static agents or the one or more adaptive agents according to the divided one or more tasks.

In an embodiment, in the assigning of the one or more agents, a static agent may be assigned to perform a selected task of the one or more tasks based on metadata associated with the one or more static agents.

In an embodiment, in the assigning of the one or more agents, in a case in which it is determined that it is impossible to perform the selected task by the static agents, the selected task may be assigned to one or more agents selected from the one or more agents of the adaptive agent cluster.

In an embodiment, the performing of the work may be configured to select one of task performing results of two or more adaptive agents in a case in which the selected task is assigned to the two or more adaptive agents.

In an embodiment, the performing of the work may be configured to associate a task performing result of an agent assigned with the selected task of the one or more tasks with an agent assigned with a next task of the selected task.

In an embodiment, the recognizing of the work to be performed may include: detecting a trigger event generated from one or more event sources; and generating the work to be performed from the trigger event.

In an embodiment, the one or more event sources may include one or more of enterprise legacy systems, groupware, communication systems, or third-party applications.

In an embodiment, the generating of the work to be performed may be configured to generate the work to be performed by additionally considering context information of a user related to the trigger event.

In an embodiment, the context information may include one or more of a department, a job position, an assigned work, a performance indicator, or a preferred response type of the user.

In an embodiment, the generating of the work to be performed may be configured to generate the work to be performed through natural language-based semantic inference of the trigger event and the context information of the user.

According to other example embodiments, provided is a non-transitory computer-readable recording medium storing computer program, which, when executed by at least one processor, causes the at least one processor to perform: recognizing work to be performed; selecting one or more agents to perform the work from one or more static agents included in a static agent cluster or one or more adaptive agents included in an adaptive agent cluster; distributing the work to the selected one or more agents; and performing the work by the one or more agents.

According to embodiments of the disclosure, the hybrid orchestrator enables static agents capable of processing structured or standard work and adaptive agents capable of responding to non-structured or non-standard situations to be efficiently controlled in a single integrated structure, thereby realizing systematic collaboration of heterogeneous agents. Accordingly, complex work, exception handling, natural language-based instruction responses, and the like, which are difficult to handle using existing automation solutions, may be realized.

Furthermore, according to embodiments of the disclosure, business processes may be automatically performed based on trigger events from event sources and user context information, so that automated workflows in which a platform may recognize and perform work by itself, rather than processes based on schedules or human instructions, may be designed.

### DESCRIPTION OF DRAWINGS

The above and other objectives, features, and advantages of the disclosure will be more clearly understood from the following detailed description, taken in conjunction with the accompanying drawings, in which:
FIG. 1 is a block diagram illustrating a system for integrated process automation between heterogeneous agents according to some implementations;
FIG. 2 is a block diagram specifically illustrating the hybrid orchestrator according to some implementations;
FIG. 3 is a flowchart illustrating a method for integration of heterogeneous agents according to some implementations;
FIG. 4 is a flowchart illustrating the agent selection operation by the hybrid control plane according to some implementations;
FIG. 5 is an example diagram illustrating event-driven invocation in the hybrid orchestrator according to some implementations; and
FIG. 6 is a block diagram illustrating a computing environment including a computing device suitable for use in example embodiments.

### DETAILED DESCRIPTION

Hereinafter, specific embodiments and implementations of the present disclosure will be described with reference to the accompanying drawings. The following detailed description is provided to assist in gaining a comprehensive understanding of at least one of a method, a device, and a system to be described hereafter. However, the detailed description is merely exemplary, and the disclosure is not limited thereto.

In the description of embodiments of the disclosure, a detailed description of known technologies related to the disclosure will be omitted in a case in which the subject matter of the disclosure may be rendered unclear thereby. Terms to be used hereinafter will be defined in consideration of functions thereof in embodiments of the disclosure, but may vary depending on the intentions of users or operators, as well as practices. Therefore, the terms shall be defined on the basis of the descriptions throughout the specification. The terms used in the detailed description shall be interpreted as being illustrative, while not being limitative, of embodiments of the disclosure. Unless clearly used otherwise, a singular form includes a plural meaning. It shall be understood that expressions such as "comprise," "include," and "have," as used herein, are for indicating particular features, numbers, steps, operations, elements, or a portion or combinations thereof and are not to be interpreted as excluding the presence or possibility of one or more features, numbers, steps, operations, elements, or a portion or combinations thereof other than those described above.

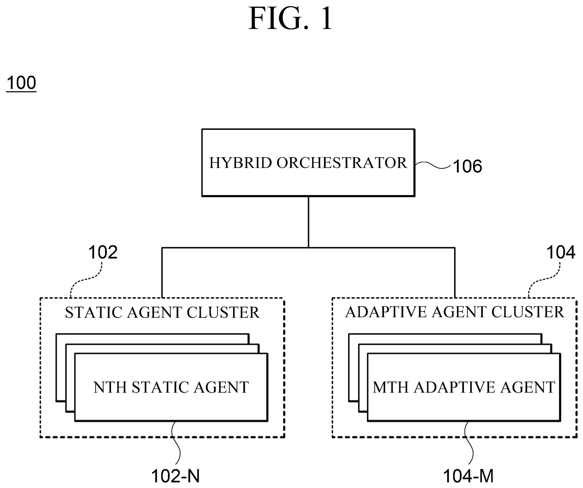

FIG. 1 is a block diagram illustrating a system 100 for integrated process automation between heterogeneous agents according to some implementations. As shown in FIG. 1, the system 100 includes a static agent cluster 102, an adaptive agent cluster 104, and a hybrid orchestrator 106.

The static agent cluster 102 is a set of agents which includes one or more static agents 102-1, ..., and 102-N. As shown in FIG. 1, the static agent cluster 102 may include N number of static agents, from a first static agent 102-1 to an Nth static agent 102-N, where N is a natural number.

In some implementations, the static agents 102-1, ..., and 102-N refer to agents which handle structured work (or processes) by robotic process automation (RPA) or work process automation (BPA).

The static agents 102-1, ..., and 102-N are generally configured to process work according to predetermined workflows or rules. The static agents 102-1, ..., and 102-N are optimized for repetitive and structured work and are advantages for fast execution speed and stability. Furthermore, due to the characteristics of the static agents suitable for rule-based and structured work, the static agents are suited for centralized orchestration. In some impelmentations, each of the static agents 102-1, ..., and 102-N may include rules or workflows for handling different processes or work. Examples of the static agents 102-1, ..., and 102-N include sales receipt input bots, automatic mailers to send KPI reports at selected times every day, periodic file backup agents, and the like.

The adaptive agent cluster 104 is a set of agents which includes one or more adaptive agents 104-1, ..., and 104-M. As shown in FIG. 1, the adaptive agent cluster 104 may include M number of static agents, from a first adaptive agent 104-1 to an Mth static agent 104-M, where M is a natural number.

In some implementations, the adaptive agents 104-1, ..., and 104-M refer to agents which are configured based on a large language model (LLM), reinforcement learning, and the like and actively judge and act based on real-time understanding of context and user intent.

The adaptive agents 104-1, ..., and 104-M are configured to make real-time decisions based on user queries, actions, or context rather than following selected workflows or rules and respond flexibly according to the situation. In this regard, the adaptive agents 104-1, ..., and 104-M have complex functions such as natural language processing, intent analysis, reasoning, and situational judgment. Examples of the adaptive agents 104-1, ..., and 104-M may include an agent which collects data from various systems and provides an explanation in response to a request such as "Summarize the sales of our department for this quarter," an agent which coordinates a schedule change requested in a messenger conversation by association with a calendar, an agent which summarizes business emails and draft responses, and the like. Like the static agents 102-1, ..., and 102-N, the adaptive agents 104-1, ..., and 104-M may be configured as agents suitable for performing different functions or work.

The hybrid orchestrator 106 performs the role of integrally controlling and coordinating the static agent cluster 102 and the adaptive agent cluster 104. Specifically, the hybrid orchestrator 106 is configured to recognize work (or processes) to be performed, select one or more agents to perform the work from the static agent cluster 102 or the adaptive agent cluster 104, and distribute the work to the selected agents.

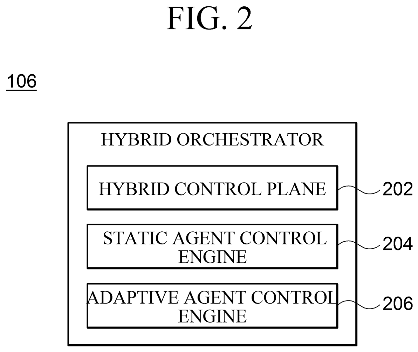

FIG. 2 is a block diagram specifically illustrating the hybrid orchestrator 106 according to some implementations. As shown in FIG. 2, the hybrid orchestrator 106 includes a hybrid control plane 202, a static agent control engine 204, and an adaptive agent control engine 206.

The hybrid control plane 202 is responsible for decision-making and flow control in the integrated process automation system 100. In some implementations, the hybrid control plane 202 recognizes the need to perform particular work by detecting a rule-based execution conditions or predetermined trigger events and determines the priority of the work. Furthermore, the hybrid control plane 202 selects one or more agents to perform the work from the clusters included in the static agent cluster 102 or the adaptive agent cluster 104 and coordinates collaboration of the selected agents.

In an embodiment, the hybrid control plane 202 may be configured to divide the work to be performed into one or more tasks (or jobs) and select an agent for each of the divided tasks to perform the task. For example, the work of "booking transportation to attend a particular event" may be divided into the following tasks:
(1) Determining the event schedule and location.
(2) Retrieving a transportation option based on the determined schedule, location, and travel time.
(3) Booking the retrieved transportation option.

The hybrid control plane 202 may divide the work to be performed into one or more tasks based on the purpose and characteristics of the work. In an embodiment, the hybrid control plane 202 may divide the work into one or more tasks using a generative artificial intelligence (AI) model, such as a large language model (LLM).

In an embodiment, the hybrid control plane 202 may distribute the divided tasks to agents selected from the static agents 102-1, ..., and 102-N or the adaptive agents 104-1, ..., and 104-M so that the divided tasks are performed by the selected agents. For example, in the above-described example, tasks 1 and 3 may be distributed to the static agents 102-1, ..., and 102-N, and task 2 may be distributed to the adaptive agents 104-1, ..., and 104-M. The hybrid control plane 202 may ensure the overall work is performed smoothly by appropriately associating the results of the tasks of the respective agents. For example, the hybrid control plane 202 may associate the result of an agent assigned with a particular task with an agent assigned with the next task, thereby ensuring smooth transfer of the result of each task to the next task.

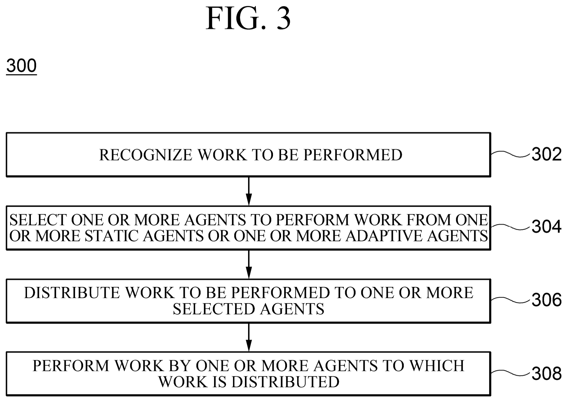

FIG. 3 is a flowchart illustrating a method 300 for integration of heterogeneous agents according to some implementations. The method shown may be performed by a computing device, such as the hybrid orchestrator 102 described above, including one or more processors and a memory which stores one or more programs to be executed by the one or more processors. In the flowchart shown, the method or process is shown as being divided into the plurality of operations, but at least some of the operations may be performed in a different order, combined with other operations, omitted, divided into sub-operations, or added and performed with one or more additional operations not shown in the flowchart.

In operation 302, the hybrid control plane 202 of the hybrid orchestrator 102 recognizes work to be performed. In some embodiments, the hybrid control plane 202 is configured to actively recognize the work to be performed based on trigger events and user context information. Herein, this active recognition is referred to as event-driven invocation. The details of the event-driven invocation will be described later.

In operation 304, the hybrid control plane 202 selects one or more agents to perform the above-described work from the one or more static agents 102-1, ..., and 102-N included in the static agent cluster 102 or the one or more adaptive agents 104-1, ..., and 104-M included in the adaptive agent cluster 104.

In operation 306, the hybrid control plane 202 distributes the work to be performed to the one or more selected agents.

In operation 308, the hybrid control plane 202 performs the work through the one or more agents to which the work is distributed. In an embodiment, the hybrid control plane 106 may monitor the progress of the work and process feedback. In human-in-the-loop situations requiring human intervention, the hybrid control plane 106 may induce the user to ask (back) questions and input parameters. Furthermore, in the event of a work processing failure or an exception, the hybrid control plane 202 may redefine the work or reconfigure tasks by dynamic replanning.

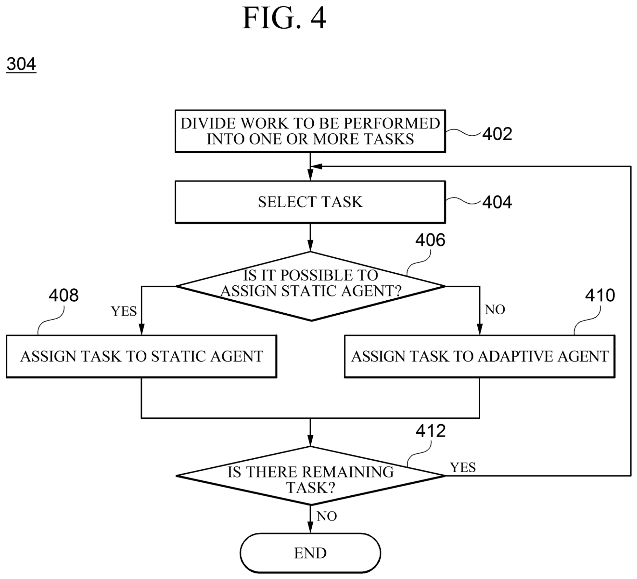

FIG. 4 is a flowchart illustrating the agent selection operation 304 by the hybrid control plane 202 according to some implementations.

In operation 402, the hybrid control plane 202 divides the work to be performed into one or more tasks.

In operation 404, the hybrid control plane 202 selects one of the divided tasks.

In operation 406, the hybrid control plane 202 determines whether the task selected in operation 304 may be assigned to a static agent. In embodiments of the disclosure, each of the static agent included in the static agent cluster 102 may include metadata. The metadata may contain information related to the static agent, such as functions performed by the static agent and conditions in which the functions are performed. The hybrid control plane 202 may determine whether there is a static agent suitable for performing the selected task by referring to the metadata of each static agent.

In a case in which it is determined in the above operation 406 that there is a static agent capable of performing the selected task, the hybrid control plane 202 assigns the task to the static agent in operation 408.

In contrast, in a case in which it is determined in the above operation 406 that there is not a static agent capable of performing the selected task, the hybrid control plane 202 assigns the task to an adaptive agent in operation 410. For example, in a case in which it is determined that it is impossible to perform the selected task by the static agent, the hybrid control plane 202 may distribute the task to the adaptive agent cluster 104 as an adaptive cluster.

In operation 412, the hybrid control plane 202 determines whether there is any task which has not yet been assigned to an agent. In a case in which there is any remaining task, the hybrid control plane 202 returns to the operation 304 and repeats the operations 406 to 412 for the remaining tasks.

In an embodiment, the hybrid control plane 202 may distribute tasks to two or more adaptive agents 104-1, ..., and 104-M at the same time. For example, in the above-described operation 410, the hybrid control plane 202 may distribute tasks to a plurality of adaptive agents 104-1, ..., and 104-M instead of to a single adaptive agent. In this case, the agents 104-1, ..., and 104-M to which tasks are assigned may perform the tasks in parallel, and the hybrid control plane 202 may compare the results of the respective adaptive agents 104-1, ..., and 104-M and select one of the results determined to be appropriate as the performing result for the task. In some embodiments, the hybrid control plane 202 may not select one of the results of the adaptive agents 104-1, ..., and 104-M, but may appropriately combine the task performing results.

Returning back to FIG. 2, the static agent control engine 204 assigns tasks to the static agents 102-1, ..., and 102-N and monitors the execution of the tasks. The static agent control engine 204 is configured to assign tasks to the static agents based on standardized or structured workflows defined in the RPA/BPA structure and monitor the execution of the tasks. The static agent control engine 204 generally uses schedules, system events, explicit workflow definitions, and the like as triggers for task performing and is optimized for association with business process management (BPM), enterprise resource planning (ERP), or the like.

The adaptive agent control engine 206 assigns tasks to the adaptive agents 104-1, ..., and 104-M and monitors the execution of the tasks. The adaptive agent control engine 206 calls appropriate adaptive agents to perform tasks in a purpose-oriented manner and, unlike the static agent control engine 204, encourages the respective adaptive agents 104-1, ..., and 104-M to collaborate autonomously. The adaptive agent control engine 206 is optimized for association with messaging platforms, emails, messengers, and collaboration tools.

In some implementations, the hybrid orchestrator 106 integrates and controls the static and adaptive agent clusters, ensures continuity with existing RPA/BPA through purpose-based work scheduling and event-driven agent selection, and enables dynamic response to unstructured situations and context-aware agent collaboration coordination. This allows business to expand automation beyond simple repetitive work to highly specialized and variable work domains.

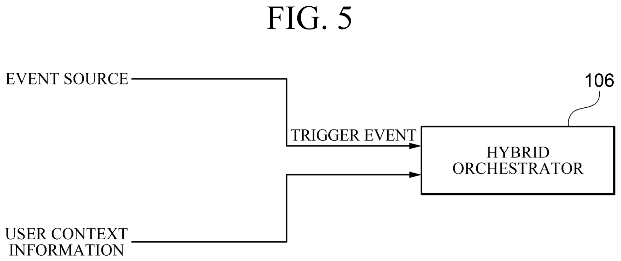

FIG. 5 is an example diagram illustrating event-driven invocation in the hybrid orchestrator according to some implementations. In embodiments of the disclosure, the event-driven invocation may refer to a structure configured to overcome the limitations of existing automation methods and enable the system to prioritize notifying users of work-related information.

Conventional RPA/BPA systems generally rely on schedule-based execution or human-invoked triggering. Because conventional RPA/BPA systems only operate when a person presses a button or at particular times, it is difficult to consider such systems as true automation. Accordingly, embodiments of the disclosure are configured to realize event-driven invocation to actively recognize and perform work to be performed based on trigger events and user context information.

As shown in FIG. 5, the hybrid orchestrator 106 is configured to detect a trigger event generated from one or more event sources and generate work to be performed from the trigger event. Here, the trigger event is not a simple event but corresponds to a context event which includes work-related meaning.

**In** embodiments of the disclosure, the event sources may include one or more of enterprise legacy systems, groupware, communication systems, or third-party applications.

The enterprise legacy systems refer to existing information systems which have been used by companies for a long time. These systems are responsible for core functions of business operations, which typically include enterprise resource planning (ERP), customer relationship management (CRM), supply chain management (SCM), and the like. The groupware and communication systems are software systems used to enhance efficiency when a plurality of people work together and include various functions which support collaboration and communication. Specifically, emails, messengers, meeting tools, and the like are examples of groupware and communication tools. Furthermore, the third-party applications refer to various external software services which a company is already using. The third-party applications may be used in association with internal systems of the company to extend the scope of work automation. For example, various types of work planning tools or collaboration tools may correspond to the third party applications.

Trigger events which may occur in each event source may be illustrated as follows. For example, for the enterprise legacy systems, trigger events may include transaction logs, status changes, indicator threshold violations, and the like occurring in ERP, CRM, SCM, or the like. For the groupware and communication systems, trigger events may include messages containing keywords, email sender/recipient information, and meeting summaries generated in emails, messengers, meetings, or the like. Furthermore, for the third-party applications, trigger events may include work task creation, comments, activity logs in collaboration tools, and the like generated by external collaboration, communication applications, or the like. The occurrence of such trigger events may be connected through the event bus layer (not shown) of the hybrid orchestrator 106 and be detected by various adapters or API/Webhook-based subscription mechanisms.

In some implementations, the hybrid orchestrator 106 may be configured to generate work to be performed by additionally considering user context information associated with the trigger event. For example, even in a case in which a trigger event is detected, the hybrid orchestrator 106 does not immediately perform the work but may additionally consider the user context information before performing work.

In an embodiment, the context information may include one or more of the department, job position, assigned work, performance indicators, or preferred response type of the user. The hybrid orchestrator 106 may analyze the department, job position, assigned work, performance indicators, preferred response type, and the like of the user using user profiling and a graph-based knowledge base. In an embodiment, the hybrid orchestrator 106 may generate the work to be performed through natural language-based semantic inference of the trigger event and the user context information. For example, in a case in which a purchasing manager of a company receives an email regarding a "material supply issue", the hybrid orchestrator 106 may determine that additional ordering work is required.

As described above, in the event-driven invocation, unlike existing methods, the system may inform relevant information and then operate based on situation detection and context inference to actively recognize and automatically perform the work, thereby achieving a high level of automation.

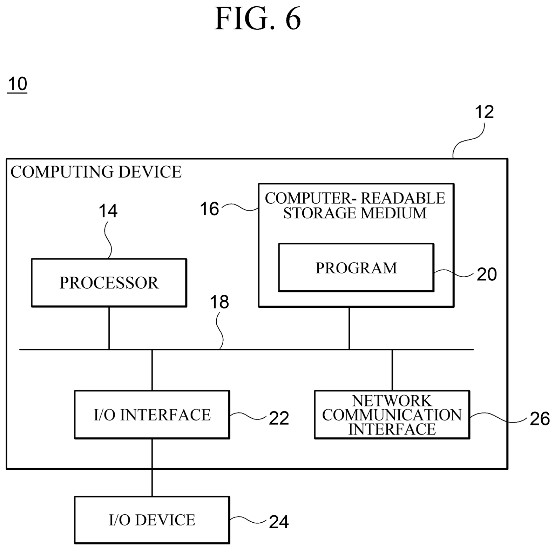

FIG. 6 is a block diagram illustrating a computing environment including a computing device suitable for use in example embodiments. In the illustrated embodiment, respective components may have functions and capabilities other than those described below, and other components not described hereafter may also be included.

A computing environment 10 shown in FIG. 6 includes a computing device 12. In some embodiments, the computing device 12 may be any of the static agents 102-1, ..., and 102-N, the adaptive agents 104-1, ..., and 104-N, or the hybrid orchestrator 106 according to embodiments. The computing device 12 includes at least one processor 14, a computer-readable storage medium 16, and a communication bus 18. The processor 14 may allow the computing device 12 to operate according to the example embodiments described above. For example, the processor 14 may execute one or more programs stored in the computer-readable storage medium 16. The one or more programs may include one or more computer-executable instructions, which may be configured to enable the computing device 12 to perform operations according to the example embodiments when executed by the processor 14.

The computer-readable storage medium 16 may be configured to store computer-executable instructions, program codes, program data, and/or other suitable forms of information. A program 20 stored in the computer-readable storage medium 16 may include a set of instructions executable by the processor 14. In an embodiment, the computer-readable storage medium 16 may be a memory (e.g., a volatile memory such as a random access memory (RAM), a non-volatile memory, or a combination thereof), one or more magnetic disk storage devices, optical disk storage devices, flash memory devices, other types of storage media which may be accessed by the computing device 12 and store intended information, or a suitable combination thereof.

The communication bus 18 may interconnect various components of the computing device 12 to each other, such as the processor 14 and the computer-readable storage medium 16.

The computing device 12 may also include one or more input/output (I/O) interfaces 22 providing an interface for one or more I/O devices 24 and one or more network communication interfaces 26. The I/O interface 22 and the network communication interfaces 26 may be connected to the communication bus 18. The illustrated I/O devices 24 may include input devices, such as a pointing device (e.g., a mouse or a track pad), a keyboard, a touch input device (e.g., a touch pad or a touch screen), a voice or sound input device, various types of sensors, and/or an image-capturing device, and/or output devices, such as a display device, a printer, a speaker, and/or a network card. Each of the illustrated I/O devices 24 may be included in the computing device 12 as one component of the computing device 12 or connected to the computing device 12 as a device separate from the computing device 12.

Although the exemplary embodiments of the disclosure have been described in detail hereinabove, a person having ordinary knowledge in the technical field to which the disclosure pertains will appreciate that various modifications are possible to the foregoing embodiments without departing from the scope of the disclosure. Therefore, the scope of the disclosure shall not be limited to the foregoing embodiments but shall be defined by the appended Claims and equivalents thereof.

## Claims

1. A process automation system comprising:
a static agent cluster comprising one or more static agents;
an adaptive agent cluster comprising one or more adaptive agents; and
a hybrid orchestrator configured to recognize work to be performed, select one or more agents to perform the work from the one or more static agents or the one or more adaptive agents, and distribute the work to the selected one or more agents.

2. The process automation system of claim 1, wherein the one or more static agents are configured to perform the work based on a predefined workflow or rule.

3. The process automation system of claim 1, wherein the one or more adaptive agents are agents based on a large language model or reinforcement learning.

4. The process automation system of claim 1, wherein the hybrid orchestrator divides the work to be performed into one or more tasks and assigns the one or more agents of the one or more static agents or the one or more adaptive agents according to the divided one or more tasks.

5. The process automation system of claim 4, wherein the hybrid orchestrator assigns a static agent to perform a selected task of the one or more tasks based on metadata associated with the one or more static agents.

6. The process automation system of claim 5, wherein in a case in which it is determined that it is impossible to perform the selected task by the one or more static agents, the hybrid orchestrator assigns the selected task to one or more agents selected from the one or more agents of the adaptive agent cluster.

7. The process automation system of claim 6, wherein the hybrid orchestrator selects one of task performing results of two or more adaptive agents in a case in which the selected task is assigned to the two or more adaptive agents.

8. The process automation system of claim 4, wherein the hybrid orchestrator associates a task performing result of an agent assigned with the selected task of the one or more tasks with an agent assigned with a next task of the selected task.

9. The process automation system of claim 1, wherein the hybrid orchestrator detects a trigger event generated from one or more event sources and generates the work to be performed from the trigger event.

10. The process automation system of claim 9, wherein the one or more event sources comprise one or more of enterprise legacy systems, groupware, communication systems, or third-party applications.

11. The process automation system of claim 9, wherein the hybrid orchestrator generates the work to be performed by additionally considering context information of a user related to the trigger event.

12. The process automation system of claim 11, wherein the context information comprises one or more of a department, a job position, an assigned work, a performance indicator, or a preferred response type of the user.

13. The process automation system of claim 11, wherein the hybrid orchestrator is configured to generate the work to be performed through natural language-based semantic inference of the trigger event and the context information of the user.

14. A process automation method performed by a computing device, wherein the computing device comprises:
one or more processors; and
a memory which stores one or more programs to be executed by the one or more programs,
the process automation method comprising:
recognizing work to be performed;
selecting one or more agents to perform the work from one or more static agents included in a static agent cluster or one or more adaptive agents included in an adaptive agent cluster;
distributing the work to the selected one or more agents; and
performing the work by the one or more agents.

15. A non-transitory computer-readable recording medium storing computer program, which, when executed by at least one processor, causes the at least one processor to perform:
recognizing work to be performed;
selecting one or more agents to perform the work from one or more static agents included in a static agent cluster or one or more adaptive agents included in an adaptive agent cluster;
distributing the work to the selected one or more agents; and
performing the work by the one or more agents.
